**Europäisches Patentamt**

**European Patent Office**

**Office européen des brevets**

(19)

(11) Veröffentlichungsnummer: **0 079 581**
**B1**

(12) # EUROPÄISCHE PATENTSCHRIFT

(45) Veröffentlichungstag der Patentschrift:
15.07.87

(51) Int. Cl.⁴: **F 02 D 21/08**

(21) Anmeldenummer: **82110387.6**

(22) Anmeldetag: **11.11.82**

(54) Verfahren und Vorrichtung zur Steuerung rückgeführter Abgasmengen bei Brennkraftmaschinen.

(30) Priorität: **17.11.81 DE 3145527**

(43) Veröffentlichungstag der Anmeldung:
**25.05.83 Patentblatt 83/21**

(45) Bekanntmachung des Hinweises auf die Patenterteilung:
**15.07.87 Patentblatt 87/29**

(84) Benannte Vertragsstaaten:
**DE FR GB IT**

(56) Entgegenhaltungen:
**FR - A - 2 415 725**
**US - A - 4 142 493**
**US - A - 4 242 997**

(73) Patentinhaber: **ROBERT BOSCH GMBH, Postfach 50, D-7000 Stuttgart 1 (DE)**

(72) Erfinder: **Buck, Rainer, Heilbronner Strasse 4, D-7146 Tamm (DE)**
Erfinder: **Küttner, Thomas, Dipl.-Ing., Lindenbachstrasse 69, D-7000 Stuttgart 31 (DE)**
Erfinder: **Wessel, Wolf, Ing. grad., Mühlstrasse 27, D-7141 Oberriexingen (DE)**

**Beschreibung**

Stand der Technik

Die Erfindung geht aus von einem Verfahren zur Steuerung rückgeführter Abgasmengen nach der Gattung des unabhängigen Anspruchs 1. Bei einem solchen durch die US-A-4 177 777 bekannten Verfahren wird mittels eines Luftmengenmessers die von der Brennkraftmaschine angesaugte Luftmenge gemessen und entsprechend dem Luftmengensignal und gegebenenfalls unter weiterer Abhängigkeit von anderen Betriebsparametern der Steuerdruck eines pneumatisch betätigbaren Abgasrückführventils geändert und damit die rückgeführte Abgasmenge gesteuert. Aus der FR-A-2 415 725 sind weiterhin ein Verfahren und eine Einrichtung zur Kraftstoffzumessung bei Brennkraftmaschinen bekannt. Dabei wird, ausgehend von Betriebsparametern, wie z.B. der Fahrpedalstellung und der Drehzahl der Brennkraftmaschine, eine Soll-Luftmenge bestimmt, aus der durch Vergleich mit der tatsächlich angesaugten Ist-Luftmenge ein Signal für die rückgeführte Abgasmenge gewonnen wird. Mit Hilfe einer Steuerklappe kann die Menge des rückgeführten Abgases geregelt werden.

Des weiteren ist ein ebenfalls pneumatisch betätigtes Abgasrückführventil bekannt, bei welchem mit Hilfe eines Magnetventiles entweder eine Verbindung zur Umgebungsluft oder eine Verbindung zu einer Unterdruckquelle hergestellt wird.

Das erstgenannte Verfahren weist den Nachteil auf, dass die Abgasrückführmenge lediglich gesteuert wird, ohne dass Fehlereinflüsse, insbesondere in der Ansteuerung des Abgasrückführventiles, erfasst werden können. Das zweite Verfahren, bei dem die rückgeführte Abgasmenge kontinuierlich in Abhängigkeit von der Differenz zwischen Ist-Luftmenge und Soll-Luftmenge gesteuert wird, arbeitet hinsichtlich der Stabilität der Brennkraftmaschine nicht optimal. Da auch kleinste Ist-Sollwertabweichungen eine Stellgrösse verursachen, ergeben sich unerwünschte Grenzwertzyklen. Auch die letztgenannte Einrichtung enthält ein ständig umschaltbares Ventil, das entsprechend seinem ihm aufgeprägten Tastverhältnis einen Druck zwischen Umgebungsluft und Vakuumdruck als Steuerdruck oder Betätigungsdruck einsteuert. Infolge des ständigen Umschaltens ergeben sich auch hier mögliche Instabilitäten der Brennkraftmaschine.

Vorteile der Erfindung

Das erfindungsgemässe Verfahren mit den kennzeichnenden Merkmalen des unabhängigen Anspruchs 1 hat gegenüber dem genannten Stand der Technik den Vorteil, dass es erst ab einer bestimmten Grösse der Abweichung des Ist-Luftmengenwertes vom Soll-Luftmengenwert zu einer Korrektur führt. Die Betätigungshäufigkeit der Stelleinrichtung wird dadurch sehr gering gehalten. Weiterhin wird im korrekt eingesteuerten Zustand der Stelleinrichtung kein Steuerdruck verbraucht. Innerhalb einer solchen Zeit ist es nicht notwendig, Korrekturen bei sich ändernden Drükken der Druckquellen durchzuführen.

Weitere vorteilhafte Ausgestaltungen der Erfindung sind den abhängigen Ansprüchen und auch dem unabhängigen Anspruch 12 mit seinen nachfolgenden abhängigen Ansprüchen zu entnehmen. Vorteile und Ausgestaltungen der Erfindung sind in der nachfolgenden Beschreibung näher erläutert.

Zeichnung

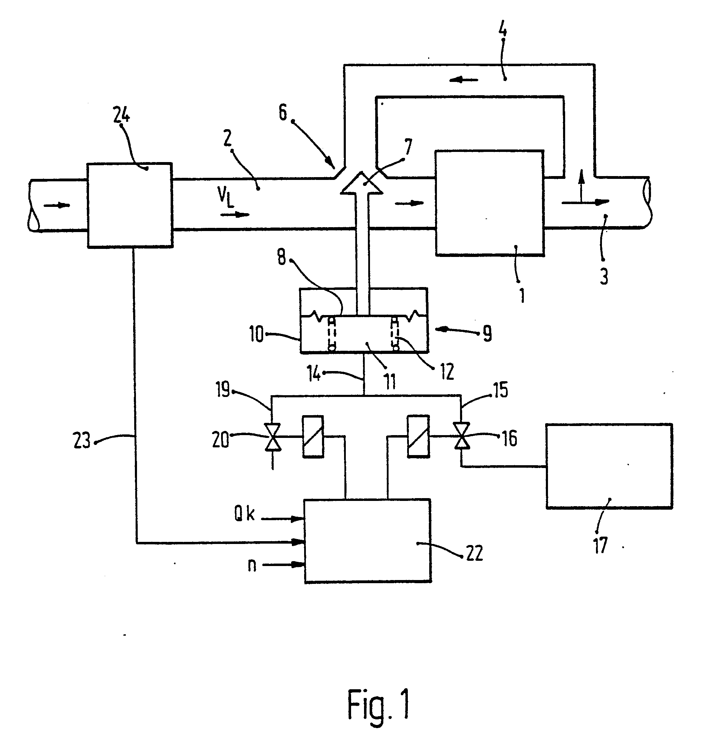

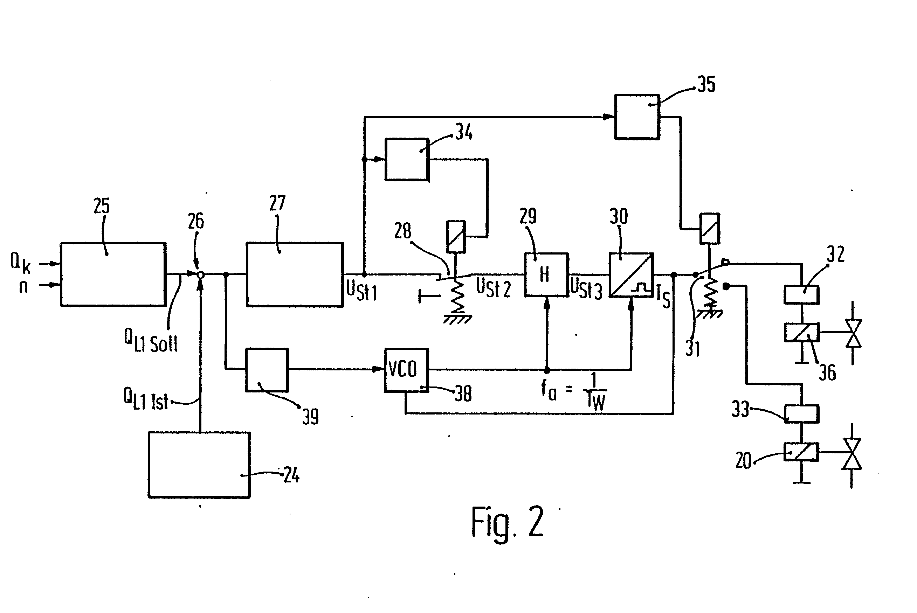

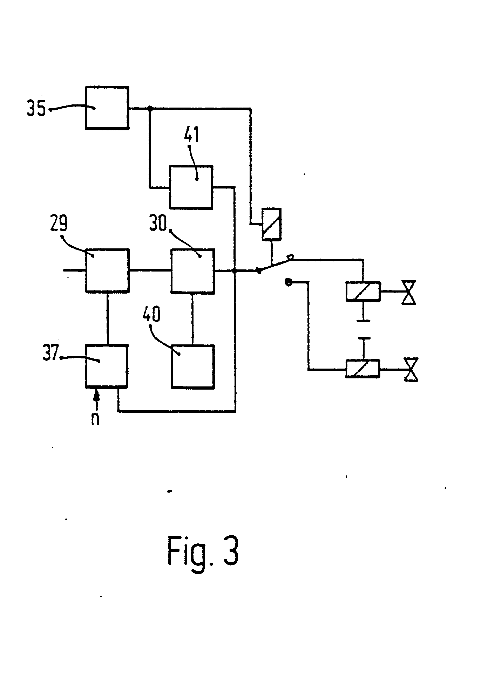

Ein Ausführungsbeispiel der Erfindung ist in der Zeichnung dargestellt und wird in der nachfolgenden Beschreibung näher erläutert. Es zeigen Fig. 1 eine Vorrichtung zur Durchführung des erfindungsgemässen Verfahrens in schematischer Anordnung, Fig. 2 ein Schaltprinzip der Steuereinrichtung zur Ansteuerung des pneumatisch arbeitenden Abgasrückführventils gemäss Fig. 1 und Fig. 3 eine zusätzliche Ausgestaltung der Steuereinrichtung.

Beschreibung des Ausführungsbeispiels

Fig. 1 zeigt eine Brennkraftmaschine 1 mit einem Ansaugsystem 2 und einem Abgassammelsystem 3 in vereinfachter Ausgestaltung. Vom Abgassammelsystem 3 führt eine Abgasrückführleitung 4 zum Saugsystem 2. In der Abgasrückführleitung bzw., wie in Fig. 1 gezeigt, an der Einmündung der Abgasrückführleitung 4 in das Saugsystem 2 ist ein Abgasrückführventil 6 vorgesehen, dessen Ventilschliessglied 7 mit der Mündung der Abgasrückführleitung als Ventilsitz zusammenarbeitet. Das Ventilschliessglied ist mit einer beweglichen Wand 8 einer pneumatisch arbeitenden Stelleinrichtung 9 verbunden. Diese besteht üblicherweise aus einem Gehäuse 10, in dem z.B. durch eine Membran 8 ein Arbeitsraum 11 dicht eingeschlossen ist. Die Membran 8 ist durch eine Rückstellfeder 12 belastet. In den Arbeitsraum 11 mündet eine Steuerdruckleitung 14, die über eine erste Druckleitung 15, in der ein erstes elektromechanisch betätigbares Ventil, z.B. ein Magnetventil 16 angeordnet ist, mit einer Unterdruckquelle 17 verbunden ist. Weiterhin ist die Steuerdruckleitung 14 über eine zweite Druckleitung 19, in der ein zweites elektro-mechanisch betätigbares Ventil 20 angeordnet ist, mit der Umgebungsluft verbunden. Beide Magnetventile 16 und 20 werden von einer Steuereinrichtung 22 angesteuert, die mit einer Steuersignalleitung 23 mit einem Luftmengenmesser 24 verbunden ist. Dieser ist in der Ansaugleitung des Saugsystems 2 angeordnet und erfasst die von der Brennkraftmaschine angesaugte Frischluftmenge. Weiterhin werden der Steuereinrichtung 22 Betriebsparametergrössen zur Bildung des Luftmengensoll-Wertes zugeführt, wie z.B. ein Lastsignal $Q_K$ und ein Drehzahlsignal n.

Der prinzipmässige Aufbau der Steuereinrichtung 22 ist der Fig. 2 zu entnehmen.

Dort ist zur Soll-Wertbildung ein Soll-Werterzeuger 25 vorgesehen, der als zweidimensionales Kennfeld ausgestaltet sein kann, in dem in Abhängigkeit von Last und Drehzahl die Werte für die Soll-Luftansaugmenge gespeichert sind. Ferner ist ein Geber 24 für die Ist-Luftansaugmenge vorgesehen, dessen Ausgangswert zusammen mit dem Soll-Wert der Luftansaugmenge auf eine Vergleichseinrichtung 26 geführt werden. Der Ausgang der Vergleichseinrichtung ist mit einem PI-Regler 27 verbunden, dessen Ausgang über einen ersten Schalter 28 auf ein Halteglied 29 geführt wird. Diesem ist eine Impulsformerstufe 30 nachgeschaltet, deren Ausgang über einen zweiten Schalter 31 entweder mit der Wicklung des ersten Magnetventils 16 oder mit der Wicklung des zweiten Magnetventils 20 verbunden wird. Den Wicklungen beider Magnetventile ist jeweils eine Endstufe 32 bzw. 33 vorgeschaltet.

Der erste Schalter 28 wird von einem Fensterkomparator 34 gesteuert, der mit dem Ausgang des PI-Reglers 27 verbunden ist. Von dem Komparator 34 wird dabei der Betrag des Ausgangssignals des PI-Reglers auf einen Minimalwert hin überwacht, bei dessen Überschreiten der erste Schalter 28 geschlossen wird, so dass die Verbindung zwischen dem Halteglied 29 und dem PI-Regler 27 hergestellt ist. Der zweite Schalter 31 wird von einem Komparator 35 gesteuert, dessen Eingang ebenfalls mit dem Ausgang des PI-Reglers 27 verbunden ist. Dieser Komparator ermittelt, ob das Ausgangssignal des PI-Reglers grösser oder kleiner Null ist. Entsprechend dem Ausgangssignal verbindet der zweite Schalter 31 dann den Ausgang der Impulsformerstufe 30 entweder mit der Endstufe 32 oder der Endstufe 33.

Der Ausgang der Impulsformerstufe 30 ist weiterhin mit einem spannungsgesteuerten Oszillator 38 verbunden, dessen Ausgang das Halteglied 29 und die Impulsformerstufe 30 triggert. Der spannungsgesteuerte Oszillator 38 wird ferner noch vom Ausgangssignal eines Komparators 39 gesteuert, der den Absolutwert des Ausgangssignals der Vergleichseinrichtung 26 mit einem oberen Schwellwert vergleicht.

Die Steuereinrichtung arbeitet folgendermassen: Entsprechend einem Lastsignal und einem Drehzahlsignal, die in an sich bekannter Weise gewonnen werden können, wird aus dem Kennfeld des Sollwerterzeugers 25 der momentane Sollwert $Q_{L,Soll}$ für die der Brennkraftmaschine zuzuführende Luftmenge ausgegeben und mit dem vom Luftmengenmesser 24 abgegebenen Signal für die Ist-Luftmenge $Q_{L,ist}$ in der Vergleichseinrichtung 26 verglichen. Die Differenz zwischen den beiden Werten wird im PI-Regler 27 verstärkt, wobei die Verstärkung im wesentlichen proportional erfolgt mit einem Integralanteil für das Langzeitverhalten. Die somit gewonnene Steuergrösse wird in zweifacher Hinsicht überprüft zum einen durch den Komparator 34 daraufhin, ob der Betrag der Steuergrösse grösser oder kleiner einem Minimalwert ist. Erst ab einem bestimmten Grad der Abweichung der Luftansaugmenge vom Sollwert wird der erste Schalter 28 geschlossen und die Steuergrösse zur Haltestufe 29 weitergeleitet. Zum anderen wird mit Hilfe des Komparators 35 festgestellt, in welche Richtung die Abweichung der Luftmenge vom Sollwert aufgetreten ist. Dementsprechend wird entweder das erste Magnetventil 16 oder das zweite Magnetventil 20 durch entsprechendes Umschalten des zweiten Schalters 31 angesteuert. Der Komparator 35 stellt dabei lediglich das Vorzeichen der vom PI-Regler 27 abgegebenen Steuergrösse fest. Bei Öffnen des Magnetventils 16 wird der Unterdruck in dem Arbeitsraum 11 erhöht und das Ventilschliessglied 7 des Abgasrückführventils 6 entgegen der Kraft der Feder 12 geöffnet, so dass vermehrt Abgasmenge zurückgeführt werden kann. Wird dagegen das zweite Magnetventil 20 geöffnet, führt dies zu einer Erhöhung des Steuerdrucks im Arbeitsraum 11 und somit zu einem Schliessen des Abgasrückführventils. Zwischendrücke können durch Schliessen beider Magnetventile beibehalten werden, so dass auch das Ventilschliessglied 7 in einer Mittelstellung stehen bleiben kann.

Die Umwandlung der Steuergrösse in eine Stellgrösse für die Magnetventile 16 und 20 erfolgt in der Impulsformerstufe 30, wo der Betrag der Steuergrösse in Impulse mit dem Betrag der Steuergrösse entsprechender Impulsbreite und in an sich bekannter Weise umgeformt werden. Die Impulsformerstufe und das Halteglied werden dabei von dem spannungsgesteuerten Oszillator 38 getriggert. Auf ein Triggersignal hin wird der im Halteglied 29 gespeicherte Wert an die Impulsformerstufe 30 weitergegeben. Diese wiederum gibt einen Stellimpuls an eines der Magnetventile 16 oder 20 aus. Mit diesem Impuls wird zugleich der spannungsgesteuerte Oszillator 38 gesteuert, und zwar derart, dass solange ein Impuls anliegt, die Frequenz des Oszillators auf einen sehr kleinen Wert gestellt wird, so dass erst nach einer Wartezeit $T_W$ ein neuer Triggerimpuls an die Haltestufe 29 bzw. die Impulsformerstufe 30 ausgegeben werden kann. Liegt dagegen kein Impuls am Ausgang der Impulsformerstufe an, wird die Schwingungsfrequenz des spannungsgesteuerten Oszillators 28 auf einen sehr grossen Wert gesetzt, so dass die Wartzeit $T_W$ gegen Null geht und unmittelbar der letzte im Halteglied 29 gespeicherte Wert in einen Stellimpuls umgewandelt wird. Eine sehr hohe Frequenz gibt der spannungsgesteuerte Oszillator 38 auch dann ab, wenn mit Hilfe des zweiten Komparators 39 festgestellt wird, dass der Betrag der Regelabweichung einen Höchstwert überschritten hat. Dann bleibt die Ausgabefrequenz des Oszillators 38 unabhängig vom Ausgangssignal der Impulsformerstufe 30 hoch, so dass laufend Stellimpulse ausgegeben werden können.

Diese Einrichtung hat den Vorteil, dass bei nur kleinen Regelabweichungen, also unterhalb der im Komparator 34 festgelegten Schwelle keine Stellgrössen zur Ansteuerung der Magnetventile 16 bzw. 20 erzeugt werden können. Beide Ventile bleiben folglich geschlossen, so dass das Ventilschliessglied 7 in einer zuletzt gehabten Stellung verharrt. Erst wenn die Abweichung der Ist-Luftmenge von Soll-Luftmenge zu gross wird, werden Stellgrössen erzeugt, die je nach Polarität der Abweichung entweder dem einen Magnetventil oder dem anderen Magnetventil zugeführt wurden, wie bereits erwähnt. Hierbei ist die Steuereinrichtung so ausgelegt, dass eine bestimmte Wartezeit $T_W$ zwischen den jeweiligen Stellimpulsen eingehalten wird. Damit wird der Totzeit der Regelstrecke Rechnung getragen. Nach einer Änderung der Abgasrückführmenge wird somit zunächst erst mal abgewartet, auf welchen neuen Wert sich der Luftmengenmesser 24 einstellt. Liegt hier dann eine Abweichung vor, die grösser ist als der im Komparator 34 festgelegte Schwellwert, so wird dann ein neuer korrigierender Impuls ausgegeben, der in der einen oder in der anderen Richtung je nach Polarität der Abweichung den Arbeitsdruck im Arbeitsraum 11 verändert. Liegt dagegen eine sehr wesentliche Abweichung von der Soll-Einstellung vor, so stellt dies der Komparator 39 fest. In diesem Fall muss schnell korrigiert werden, so dass über den spannungsgesteuerten Oszillator 38 ein korrigierender Dauerimpuls erzeugt wird.

Die für den Normalbetrieb gültige Wartezeit $T_W$ kann zur besseren Anpassung auch noch drehzahlabhängig geändert werden. Mit dem Drehzahlsteuerwert, der den Sollwert-Erzeuger 25 ansteuert, kann gleichzeitig auch die niedrige Frequenz des spannungsgesteuerten Oszillators 38 eingestellt werden.

Durch Einführen einer toten Zone in Höhe des Schwellwertes des Komparators 34 wird zu häufiges Schalten bei kleinsten Regelabweichungen vermieden. Insbesondere wird vermieden, dass sich hier ein Grenzwertzyklus einstellt. Weiterhin verhindert die Wartezeit $T_W$ ein zu häufiges Schalten. Es ist vorteilhaft, dass die Impulsbreiten, mit denen die Magnetventile angesteuert werden, proportional zum Betrag der Regelabweichung sind.

Alternativ kann auch die Impulsformerstufe 30 durch einen eigenen Oszillator 40 gesteuert werden und das Haltglied 29 vom Ausgang der Impulsformerstufe 30 über ein Zeitglied 37 gesteuert werden (Fig. 3). Solange am Ausgang der Impulsformerstufe ein Impuls anliegt, wird das Haltglied 29 über das Zeitglied gesperrt. Nach dem Impuls hält das Zeitglied 37 das Haltglied noch während einer Wartezeit $T_W$ gesperrt, nach deren Ablauf ein neuer Wert zu einer Impulsformung an die Impulsformerstufe 30 ausgegeben wird. Die Wartezeit des Zeitgliedes kann dabei ebenfalls drehzahlabhängig gesteuert werden.

Eine weitere Ausgestaltung der Erfindung besteht darin, dass der Komparator 35 eine Impulsverlängerungsstufe 41 steuert, die bei jedem Umschalten des Komparators 35 einen Verlängerungsimpuls an den von der Impulsformerstufe 30 abgegebenen Impuls anhängt. Auf diese Weise wird vorteilhaft eine Hysterese des pneumatischen Schaltventils aufgehoben, so dass das Abgasrückführventil schnell den sich ändernden Bedingungen folgen kann.

Insbesondere ergibt sich mit der vorbeschriebenen Lösung ein preiswertes Stellwerk für ein Abgasrückführventil mit geringer Leistungsaufnahme und geringem Stellmittelverbrauch. Weiterhin werden auch die Schaltelemente, insbesondere die Magnetventile durch die herabgesetzte Schalterhäufigkeit nur wenig beansprucht.

**Patentansprüche**

1. Verfahren zur Steuerung der vom Abgassystem einer Brennkraftmaschine zu deren Saugseite rückgeführten Abgasmenge mit Ermitteln der angesaugten Luftmenge und Steuerung der Abgasrückführmenge in Abhängigkeit von der angesaugten Luftmenge, wobei in Abhängigkeit von Betriebsparametern der Brennkraftmaschine Sollwerte für die angesaugte Luftmenge gebildet werden und mit der jeweiligen Ist-Menge der Luft verglichen werden und entsprechend dem Vergleichsergebnis eine Steuergrösse erzeugt wird, entsprechend der eine Stelleinrichtung für ein Abgasrückführmengendosierventil betätigt wird und damit durch Änderung der Abgasrückführmenge die Luftmenge korrigiert wird, dadurch gekennzeichnet, dass die Steuergrösse betragsmässig auf einen Minimalwert mit Hilfe einer Schwellwertabtasteinrichtung überprüft wird und erst ab Überschreiten des Minimalwertes zu einer Stellgrösse für die Betätigung der Stelleinrichtung (9, 16, 20) verarbeitet wird, wobei die Stelleinrichtung pneumatisch arbeitet und bei Nichtbetätigung der zuletzt eingestellte Steuerdruck beibehalten wird.

2. Verfahren nach Anspruch 1, dadurch gekennzeichnet, dass die Steuergrösse durch Proportionalverstärkung und Integration des Vergleichsergebnisses gebildet wird.

3. Verfahren nach einem der Ansprüche 1 oder 2, dadurch gekennzeichnet, dass der Arbeitsdruck der Stelleinrichtung als Mischdruck aus den Drücken zweier Druckquellen gebildet wird, deren Verbindungen zur Stelleinrichtung mittels wenigstens einer elektro-mechanisch arbeitenden Ventilanordnung entsprechend der Stellgrösse alternativ zu- bzw. abschaltbar sind.

4. Verfahren nach Anspruch 3, dadurch gekennzeichnet, dass die Steuergrösse in als Stellgrösse dienende Impulse umgeformt wird, deren Wirkstrom pro Zeiteinheit proportional dem Betrag der Steuergrösse ist.

5. Verfahren nach einem der Ansprüche 3 oder 4, dadurch gekennzeichnet, dass das Vergleichsergebnis hinsichtlich der Richtung der Abweichung vom Sollwert überprüft wird und daraus ein Steuerwert gebildet wird, durch den die Zuleitung der Stellgrösse zur Ventilanordnung (16, 20) zur Aufsteuerung einer der Verbindungen zwischen den Druckquellen und der Steuereinrichtung gesteuert wird.

6. Verfahren nach einem der Ansprüche 2 oder 4, dadurch gekennzeichnet, dass die Steuergrösse oder die Stellgrösse in einen Signalspeicher (29) gegeben wird und dort über eine Wartezeit ($T_W$) gespeichert wird und nach Ablauf der Wartezeit zur Aufsteuerung der Ventilanordnung freigegeben wird.

7. Verfahren nach Anspruch 6, dadurch gekennzeichnet, dass die Wartezeit abhängig von der Drehzahl gesteuert wird.

8. Verfahren nach Anspruch 7, dadurch gekennzeichnet, dass der Betrag der Steuergrösse oder der Stellgrösse mit einem Schwellwert verglichen wird und bei dessen Überschreiten die Wartezeit (Tw) zu Null gemacht wird.

9. Verfahren nach Anspruch 4 in Verbindung mit Anspruch 5, dadurch gekennzeichnet, dass bei Änderung der Richtung der Abweichung des Istwerts vom Sollwert die Impulsbreite des ersten, nach Richtungswechsel gebildeten Impulses um einen bestimmten Betrag verlängert wird.

10. Verfahren nach einem der vorstehenden Ansprüche, dadurch gekennzeichnet, dass der Luftmengensollwert in Abhängigkeit von Last und Drehzahl der Brennkraftmaschine gebildet wird.

11. Vorrichtung zur Durchführung des Verfahrens nach Anspruch 1 mit einer im Saugrohr der Brennkraftmaschine angeordneten Luftmengenmesseinrichtung und einem pneumatisch arbeitenden Stellglied, dessen beweglicher Teil mit dem Ventilschliessglied eines Abgasrückführventils verbunden ist und dessen vom beweglichen Teil eingeschlossener Arbeitsraum über eine Ventilanordnung mit wenigstens einer von wenigstens zwei Druckquellen unterschiedlichen Niveaus verbindbar ist, gesteuert von einer Steuereinrichtung, die einen Sollwerterzeuger (25) aufweist, der einen in Abhängigkeit von Betriebsparametern gebildeten Sollwert für die von der Brennkraftmaschine abzusaugende Luftmenge abgibt und eine Vergleichseinrichtung (26) aufweist, deren Eingänge mit dem Sollwerterzeuger (25) und der Luftmengenmesseinrichtung (24) verbunden sind und deren Ausgang mit der Betätigungseinrichtung der Ventilanordnung verbunden ist, dadurch gekennzeichnet, dass die Verbindung der wenigstens zwei Druckquellen jeweils durch die Ventilanordnung (16, 20) gesteuert wird und dabei durch die Ventilanordnung je nach Ansteuerung entweder nur die eine oder die andere Verbindung zwischen Arbeitsraum und Druckquellen aufgesteuert ist oder beide Verbindungen unterbrochen sind und dass der Vergleichseinrichtung (26) ein Regelverstärker (27) nachgeschaltet ist, dessen Ausgang über einen ersten Schalter (28) mit einer Stellgrössenformerstufe (30) verbindbar ist, an die wenigstens ein elektro-mechanisches Schaltglied (16, 20) der Ventilanordnung angeschlossen ist und der erste Schalter durch eine Schwellschalteinrichtung (34) gesteuert wird, die vom Ausgangssignal des Regelverstärkers gesteuert wird und den Absolutwert dieses Ausgangssignals mit einem Schwellwert vergleicht.

12. Vorrichtung nach Anspruch 11, dadurch gekennzeichnet, dass die Ventilanordnung aus zwei elektro-mechanisch betätigbaren Ventilen (16 und 20) besteht, die jeweils in einer Verbindungsleitung (15, 19) zwischen den Druckquellen und dem Arbeitsraum (11) des pneumatischen Stellglieds (9) angeordnet sind und dass in der Verbindung zwischen der Stellgrössenformerstufe (30) und den Ventilen (16, 20) ein Umschalter (31) vorgesehen ist, der von einem die Polarität des Ausgangssignals des Regelverstärkers (27) erfassenden Steuerglied (35) gesteuert wird.

13. Vorrichtung nach Anspruch 12, dadurch gekennzeichnet, dass die Stellgrössenformerstufe (30) eine Impulsformerstufe ist, der ein Signalspeicher (29) vorgeschaltet ist und die beide von einem spannungsgesteuerten Oszillator (38) getriggert werden.

14. Vorrichtung nach Anspruch 13, dadurch gekennzeichnet, dass der Eingang des Oszillators (38) mit dem Ausgang eines Schwellwertschalters (39) verbunden ist, dessen Eingang vom Ausgang der Vergleichseinrichtung (26) gesteuert wird und dass der Schwellwertschalter so ausgebildet ist, dass er den Absolutwert des Ausgangssignals mit einem oberen Schwellwert vergleicht, bei dessen Überschreiten die Frequenz des Oszillators (38) auf einen hohen Wert gebracht wird.

15. Vorrichtung nach Anspruch 14, dadurch gekennzeichnet, dass der Ausgang der Impulsformerstufe (30) mit dem Oszillator verbunden ist und der Oszillator je nach Anliegen oder Nichtanliegen eines Impulses am Ausgang der Impulsformerstufe auf einen hohen oder niedrigen Frequenzwert gesteuert wird.

16. Vorrichtung nach Anspruch 14, dadurch gekennzeichnet, dass das Steuerglied (35) mit einer Impulsverlängerungseinrichtung verbunden ist, die beim Umschalten der Steuereinrichtung jeweils einen Verlängerungsimpuls auf den Ausgang der Impulsformerstufe (30) gibt.

17. Vorrichtung nach Anspruch 14, dadurch gekennzeichnet, dass der Ausgang der Impulsformerstufe (30) über ein Zeitglied (37) mit dem Halteglied (29) verbunden ist, welches durch das Ausgangssignal des Zeitglieds getriggert wird.

18. Vorrichtung nach Anspruch 17, dadurch gekennzeichnet, dass die Verzögerungszeit des Zeitgliedes (37) in Abhängigkeit von der Drehzahl änderbar ist.

19. Vorrichtung nach einem der vorstehenden Ansprüche, dadurch gekennzeichnet, dass der Sollwerterzeuger (25) aus einem zweidimensionalen Kennfeldspeicher besteht, in dem Sollwerte in Abhängigkeit von der Drehzahl und der Last der Brennkraftmaschine gespeichert sind.

**Claims**

1. Process for controlling the recirculated exhaust gas rate from the exhaust gas system of an internal combustion engine to its intake side, with detemination of the rate of air drawn in and control of the exhaust gas recirculation rate as a function of the rate of air drawn in, set values being formed, as a function of operating parameters of the internal combustion engine, for the rate of air drawn in and compared with the respective actual rate of air and, corresponding to the comparison result, a control variable being produced, corresponding to which a correcting mechanism for an exhaust gas recirculation rate metering valve is actuated and the rate of air thus corrected by altering the exhaust gas recirculation rate, characterized in that the control variable is checked for its amount in relation to a minimum value with the aid of a threshold scanning device and is only processed to form a correcting variable for the actuation of the correcting mechanism (9, 16, 20) from when the minimum value is exceeded, the correcting mechanism operating pneumatically and, if not actuated, the control pressure last set being retained.

2. Process according to Claim 1, characterized in that the control variable is formed by proportional amplification and integration of the comparison result.

3. Process according to one of Claims 1 or 2, characterized in that the operating pressure of the correcting mechanism is formed as a mixed pressure from the pressures of two pressure sources, the connections of which to the correcting mechanism can be switched alternatively on or off by means of at least one electromechanically operating valve arrangement, according to the correcting variable.

4. Process according to Claim 3, characterized in that the control variable is converted into pulses which serve as correcting variable and whose active current per unit of time is proportional to the amount of the control variable.

5. Process according to one of Claims 3 or 4, characterized in that the comparison result is checked with regard to the direction of the deviation from the set value and used to form a control value, by means of which the supply line of the correcting variable to the valve arrangement (16, 20) is controlled for opening one of the connections between the pressure sources and the control device.

6. Process according to one of Claims 2 or 4, characterized in that the control variable or the correcting variable is entered in a signal memory (29), where it is stored for a waiting time ($T_W$) and released for opening of the valve arrangement after expiry of the waiting time.

7. Process according to Claim 6, characterized in that the waiting time is controlled as a function of the rotational speed.

8. Process according to Claim 7, characterized in that the amount of the control variable or of the correcting variable is compared with a threshold value and the waiting time ($T_W$) is made equal to zero if said threshold value is exceeded.

9. Process according to Claim 4 in conjunction with Claim 5, characterized in that, if there is a change in the direction of the deviation of the actual value from the set value, the pulse width of the first pulse formed after the change in direction is extended by a certain amount.

10. Process according to one of the preceding Claims, characterized in that the air rate set value is formed as a function of load and rotational speed of the internal combustion engine.

11. Apparatus for implementation of the process according to Claim 1 with an air rate measuring device arranged in the intake pipe of the internal combustion engine and with a pneumatically operating correcting element, whose moving part is connected to the valve closing element of an exhaust gas recirculation valve and whose working space, enclosed by the moving part, can be connected via a valve arrangement to at least one of at least two pressure sources at different levels, controlled by a control device which has a set value generator (25), which emits a set value, formed as a function of operating parameters, for the rate of air to be drawn in by the internal combustion engine and has a comparison device (26), whose inputs are connected to the set value generator (25) and the air rate measuring device (24) and whose output is connected to the actuation mechanism of the valve arrangement, characterized in that the connection of the at least two pressure sources is in each case controlled by the valve arrangement (16, 20) and in this way the valve arrangement has the effect that, depending on actuation, either only one or the other connection between working space and pressure sources is open or both connections are interrupted, and in that the comparison device (26) has connected downstream of it a control amplifier (27), whose output can be connected by means of a first switch (28) to a correcting variable former stage (30), to which at least one electromechanical switching element (16, 20) of the valve arrangement is connected and the first switch is controlled by a threshold switching device (34), which is controlled by the output signal of the control amplifier and compares the absolute value of this output signal to a threshold value.

12. Apparatus according to Claim 11, characterized in that the valve arrangement consists of two electromechanically operable valves (16 and 20), which in each case are arranged in a connecting line (15, 19) between the pressure sources and the working space (11) of the pneumatic correcting element (9), and in that a change-over switch (31) is provided in the connection between the correcting variable former stage (30) and the valves (16, 20) and is controlled by a control element (35), registering the polarity of the output signal of the control amplifier (27).

13. Apparatus according to Claim 12, characterized in that the correcting variable former stage (30) is a pulse former stage upstream of which a signal memory (29) is connected, both of which are triggered by a voltage-controlled oscillator (38).

14. Apparatus according to Claim 13, characterized in that the input of the oscillator (38) is connected to the output of a threshold switch (39), whose input is controlled by the output of the comparison device (26), and in that the threshold switch is designed in such a way that it compares the absolute value of the output signal with an upper threshold value, the frequency of the oscillator (38) being brought to a high value whenever said threshold value is exceeded.

15. Apparatus according to Claim 14, characterized in that the output of the pulse former stage (30) is connected to the oscillator and the oscillator is controlled to a high or low frequency value depending on whether or not there is a pulse at the output of the pulse former stage.

16. Apparatus according to Claim 14, characterized in that the control element (35) is connected to a pulse extension device, which passes an extension pulse to the output of the pulse former stage (30) each time the control device is switched over.

17. Apparatus according to Claim 14, characterized in that the output of the pulse former stage (30) is connected by means of a timing element (37) to the holding element (29), which is triggered by the output signal of the timing element.

18. Apparatus according to Claim 17, characterized in that the delay time of the timing element (37) is variable as a function of the rotational speed.

19. Apparatus according to one of the preceding Claims, characterized in that the set value generator (25) consists of a two-dimensional performance data memory, in which set values are stored as a function of the rotational speed and load of the internal combustion engine.

**Revendications**

1. Procédé pour commander la quantité de gaz d'échappement recyclés à partir du système d'échappement d'un moteur à combustion interne vers son côté aspiration, avec détermination de la quantité d'air aspiré et commande de la quantité des gaz d'échappement recyclés en fonction de la quantité d'air aspiré, des valeurs de consigne étant élaborées pour la quantité d'air aspiré en fonction des paramètres de fonctionnement du moteur à combustion interne et étant comparées avec la quantité réelle correspondante d'air tandis qu'en fonction du résultat de cette comparaison, une grandeur de commande est engendrée, en fonction de laquelle un dispositif de réglage est actionné pour une soupape de dosage de la quantité de gaz d'échappement recyclés, et qu'ainsi, par modification de la quantité des gaz d'échappement recyclés, la quantité d'air est corrigée, procédé caractérisé en ce que la grandeur de commande est vérifiée en ce qui concerne une valeur minimale à l'aide d'un dispositif de balayage de valeur et ce n'est qu'à partir du dépassement de cette valeur minimale, qu'il est élaboré une grandeur de réglage pour l'actionnement du dispositif de réglage (9, 16, 20), ce dispositif de réglage fonctionnant pneumatiquement et étant maintenu lors du non actionnement de la pression de commande réglée en dernier lieu.

2. Procédé selon la revendication 1, caractérisé en ce que la grandeur de commande est élaborée par amplification proportionnelle et intégration du résultat de la comparaison.

3. Procédé selon une des revendications 1 ou 2, caractérisé en ce que la pression de fonctionnement du dispositif de réglage, est élaborée sous la forme de pression mixte à partir des pressions de deux sources de pression, dont les liaisons vers le dispositif de réglage sont connectées ou bien déconnectées alternativement de façon correspondante à la grandeur de réglage au moyen d'au moins un ensemble de soupapes fonctionnant électromécaniquement.

4. Procédé selon la revendication 3, caractérisé en ce que la grandeur de commande est transformée en impulsions utilisées comme grandeurs de réglage, et dont le courant utile par unité de temps, est proportionnel à la valeur de la grandeur de commande.

5. Procédé selon une des revendications 3 ou 4, caractérisé en ce que le résultat de la comparaison est vérifié en ce qui concerne le sens de l'écart à partir de la valeur de consigne, et qu'à partir de là, il est élaboré une valeur de commande grâce à laquelle, est commandée la transmission de la grandeur de réglage à l'ensemble de soupape (16, 20) pour commander une des liaisons entre les sources de pression et le dispositif de commande.

6. Procédé selon une des revendications 2 ou 4, caractérisé en ce que la grandeur de commande ou bien la grandeur de réglage, est introduite dans une mémoire de signaux (29) où elle est mémorisée pendant une période d'attente ($T_W$), et est libérée après l'écoulement de cette période d'attente, pour commander l'ensemble de soupapes.

7. Procédé selon la revendication 6, caractérisé en ce que la période d'attente est commandée en fonction de la vitesse de rotation.

8. Procédé selon la revendication 7, caractérisé en ce que la valeur de la grandeur de commande ou bien de la grandeur de réglage, est comparée avec une valeur de seuil, et lors du dépassement de cette valeur, la période d'attente ($T_W$) est mise à zéro.

9. Procédé selon la revendication 4, en combinaison avec la revendication 5, procédé caractérisé en ce que lors de modifications du sens de l'écart, entre la valeur réelle et la valeur de consigne, la largeur de la première impulsion formée après le changement de sens, est prolongée d'une certaine quantité.

10. Procédé selon une des précédentes revendications, caractérisé en ce que la valeur de consigne de la quantité d'air, est élaborée en fonction de la charge et de la vitesse de rotation du moteur à combustion interne.

11. Dispositif pour la mise en œuvre du procédé selon la revendication 1, avec un dispositif de mesure de la quantité d'air disposé dans la tubulure d'aspiration du moteur à combustion interne, et avec un organe de réglage fonctionnant pneumatiquement, dont la partie mobile est reliée à l'organe de fermeture d'une soupape de recyclage des gaz d'échappement, et dont la chambre de travail délimitée par la partie mobile, est susceptible d'être reliée, par l'intermédiaire d'un ensemble de soupapes, avec au moins une, d'au moins deux sources de pression d'un niveau différent, dispositif commandé par un dispositif de commande qui comporte un générateur de valeur de consigne (25) qui délivre une valeur de consigne élaborée en fonction de paramètres de fonctionnement pour la quantité d'air devant être aspiré par le moteur à combustion interne, et qui comporte un dispositif de comparaison (26) dont les entrées sont reliées au générateur de valeur de consigne (25) et au dispositif de mesure de la quantité d'air (24), tandis que sa sortie est reliée au dispositif d'actionnement de l'ensemble de soupapes, dispositif caractérisé en ce que la liaison des deux sources de pression au moins, est commandée respectivement par l'ensemble de soupapes (16, 20) et qu'alors, grâce à cet ensemble de soupapes et selon la commande, seulement l'une ou l'autre liaison entre la chambre de travail et les sources de pression est commandée ou bien les deux liaisons sont interrompues, tandis qu'à la suite du dispositif de comparaison (26) est branché un amplificateur de réglage (27) dont la sortie est susceptible d'être reliée par l'intermédiaire d'un premier commutateur (28) avec un étage de mise en forme des grandeurs de réglage (30) auquel est raccordé, au moins, un organe de commutation électromécanique (16, 20) de l'ensemble de soupapes, le premier commutateur étant commandé par un dispositif de commutation à valeur de seuil (34) qui est commandé par le signal de sortie de l'amplificateur de réglage et qui compare la valeur absolue de ce signal de sortie avec une valeur de seuil.

12. Dispositif selon la revendication 11, caractérisé en ce que l'ensemble de soupapes est constitué de deux soupapes (16 et 20) susceptibles d'être actionnées électromécaniquement, et qui sont respectivement disposées sur une liaison (15, 19) entre les sources de pression et la chambre de travail (11) de l'organe pneumatique de réglage (9), tandis que sur la liaison entre l'étage de mise en forme des grandeurs de réglage (30) et les soupapes (16, 20), il est prévu un inverseur (31) qui est commandé par un organe de commande (35) détectant la polarité du signal de sortie de l'amplificateur de réglage (27).

13. Dispositif selon la revendication 12, caractérisé en ce que l'étage de mise en forme des grandeurs de réglage (30) est un étage de mise en forme d'impulsions en avant duquel est branchée une mémoire de signaux (29), ces deux dispositifs étant déclenchés par un oscillateur (38) commandé en tension.

14. Dispositif selon la revendication 13, caractérisé en ce que l'entrée de l'oscillateur (38) est reliée à la sortie d'un commutateur à valeur de seuil (39) dont l'entrée est commandée à partir de la sortie du dispositif de comparaison (26), tandis que ce commutateur à valeur de seuil est constitué de façon qu'il compare la valeur absolue du signal de sortie avec une valeur supérieure de seuil, lors du dépassement de laquelle la fréquence de l'oscillateur (38) est amenée à une valeur élevée.

15. Dispositif selon la revendication 14, caractérisé en ce que la sortie de l'étage de mise en forme des impulsions (30) est reliée à l'oscillateur, tandis que l'oscillateur, selon qu'une impulsion est appliquée ou bien n'est pas appliquée à la sortie de l'étage de mise en forme des impulsions, est commandé à une valeur de fréquence élevée ou basse.

16. Dispositif selon la revendication 14, caractérisé en ce que l'organe de commande (35) est relié à un dispositif de prolongement des impulsions, qui lors de la commutation du dispositif de commande, délivre respectivement une impulsion de prolongement sur la sortie de l'étage de mise en forme des impulsions (30).

17. Dispositif selon la revendication 14, caractérisé en ce que la sortie de l'étage de mise en forme des impulsions (30) est relié par l'intermédiaire d'un organe temporisé (37) à l'organe de maintien (29) qui est déclenché par le signal de sortie de cet organe temporisé.

18. Dispositif selon la revendication 17, caractérisé en ce que la période de temporisation de l'organe de temporisation (37) est susceptible d'être modifiée en fonction de la vitesse de rotation.

19. Dispositif selon une des précédentes revendications, caractérisé en ce que le générateur de valeur de consigne (25) est constitué par une mémoire de champ caractéristique à deux dimensions, dans laquelle sont mémorisées des valeurs de consigne en fonction de la vitesse de rotation et de la charge du moteur à combustion interne.

Fig. 1

Fig. 2

Fig. 3